# EUROPÄISCHE PATENTSCHRIFT

(11) **EP 3 743 311 B1**
(45) Veröffentlichungstag und Bekanntmachung des Hinweises auf die Patenterteilung: **06.09.2023**
(21) Anmeldenummer: 19700377.5
(22) Anmeldetag: 10.01.2019
(51) Int. Cl.: B60R 1/00, H04N 7/18

(54) **VERFAHREN UND VORRICHTUNG ZUM BETREIBEN EINES KAMERA-MONITOR-SYSTEMS FÜR EIN KRAFTFAHRZEUG**
METHOD AND DEVICE FOR OPERATING A VIDEO MONITORING SYSTEM FOR A MOTOR VEHICLE
PROCEDE ET DISPOSITIF POUR OPÉRER UN SYSTEME DE SURVEILLANCE VIDÉO POUR UN VÉHICULE AUTOMOBILE

(30) Priorität: 26.01.2018 DE 102018201217
(43) Veröffentlichungstag der Anmeldung: 02.12.2020
(73) Patentinhaber: Continental Automotive Technologies GmbH, 30165 Hannover (DE)
(72) Erfinder: WEINLICH, Andreas, 81737 München (DE)
(74) Vertreter: Continental Corporation
(86) Internationale Anmeldenummer: PCT/EP2019/050578
(87) Internationale Veröffentlichungsnummer: WO 2019/145162

(56) Entgegenhaltungen:
- EP-A1- 2 555 518
- EP-A1- 2 763 410
- EP-A1- 3 138 736
- WO-A1-2015/013311
- DE-A1-102015 218 033
- JP-A- 2013 207 746
- US-A1- 2014 160 276

## Beschreibung

Die Erfindung betrifft ein Verfahren zum Betreiben eines Kamera-Monitor-Systems für ein Kraftfahrzeug, insbesondere für einen Lastkraftwagen. Die Erfindung betrifft weiterhin eine Vorrichtung, die dazu ausgebildet ist, das Verfahren durchzuführen.

Kraftfahrzeuge, beispielsweise Lastkraftwagen und Busse, weisen herkömmlich Außenspiegel auf. Es sind auch Spiegelersatzsysteme bekannt, bei denen mittels einer Kamera und eines Monitors die Sichtbereiche der üblichen Außenspiegel abgebildet werden. Solche Spiegelersatzsysteme werden auch als Kamera-Monitor-Systeme bezeichnet.

Ein Verfahren und eine Vorrichtung zum Betreiben eines Kamera-Monitor-Systems ist beispielsweise aus der EP 3 138 736 A1 bekannt. Die EP 3 138 736 A1 offenbart ein Spiegelersatzsystem als Kamera-Monitor-System eines Kraftfahrzeugs, insbesondere eines Nutzfahrzeugs.

Die US 2014/0160276 A1 offenbart Fahrzeuge mit daran montierten Kameras und insbesondere Fahrzeuge mit einer oder mehreren nach außen gerichteten Kameras, wie z. B. nach hinten gerichteten Kameras und/oder dergleichen.

Die WO 2015/013311 A1 offenbart ein Fahrzeugabbildungssystem, insbesondere ein System zum Sammeln von Bilddaten aus der Umgebung eines Fahrzeugs mit einer oder mehreren Kameras und zum Erzeugen einer interaktiven Anzeige innerhalb des Fahrzeugs.

Die EP 2 555 518 A1 offenbart ein System zum Unterstützen des Fahrens eines Fahrzeugs, insbesondere eine Vorrichtung zum Verarbeiten und Anzeigen eines aufgenommenen Bilds, um es einem Fahrgast leicht zu machen, die Umgebung des Fahrzeugs visuell zu erkennen.

Die EP 2 763 410 A1 offenbart ein System zur Verbesserung der Fahrzeugsicherheit. Das System ist insbesondere, aber nicht ausschließlich, zur Verwendung bei der Verbesserung der Motorradsicherheit geeignet. Es kann auch zur Verbesserung der Sicherheit eines beliebigen geeigneten Fahrzeugs geeignet sein, mit dem es verwendet werden kann. Das System weist ein Bildgebungssystem mit einer Bilderfassungseinrichtung auf.

Die DE 10 2015 218033 A1 offenbart ein Verfahren zur Verbesserung der rückwärtigen Sicht in einem Kraftfahrzeug, wobei ein hinterer Abschnitt des Kraftfahrzeugs um die Hochachse relativ zu einem vorderen Abschnitt des Kraftfahrzeugs um einen Knickwinkel verdrehbar ist, wobei die rückwärtige Sicht durch zumindest je ein Kamera-Monitor-System je Fahrzeugseite sichergestellt wird indem eine Kamera mit einem definierten Aufnahmefeld ein Kamerabild erzeugt und dieses Kamerabild vollständig oder teilweise auf einem Monitor als Monitorbild angezeigt wird.

Es ist wünschenswert, ein Verfahren zum Betreiben eines Kamera-Monitor-Systems für ein Kraftfahrzeug anzugeben, das einen zuverlässigen Betrieb ermöglicht. Es ist weiterhin wünschenswert, eine Vorrichtung zum Betreiben eines Kamera-Monitor-Systems anzugeben, die einen verlässlichen Betrieb ermöglicht.

Die Erfindung zeichnet sich aus durch ein Verfahren gemäß Anspruch 1 zum Betreiben eines Kamera-Monitor-Systems für ein Kraftfahrzeug sowie durch eine korrespondierende Vorrichtung gemäß Anspruch 7, die ausgebildet ist, das Verfahren auszuführen.

Gemäß der Erfindung weist das Kamera-Monitor-System eine Kamera auf, die einer Längsseite des Kraftfahrzeugs zugeordnet ist. Die Kamera ist dazu ausgebildet, ein Bild einer Umgebung des Kraftfahrzeugs bereitzustellen.

Ein Interessensbereich in der Umgebung wird vorgegeben. Das Bild der Kamera wird zu einem transformierten Bild transformiert, sodass der Interessensbereich in dem transformierten Bild in einem vorgegebenen Bildbereich angeordnet ist, unabhängig von einer Veränderung der Lage des Interessensbereichs in der Umgebung. Der vorgegebene Bildbereich weist eine vorgegebene Vergrößerung auf. Der Interessensbereich wird in dem transformierten Bild insbesondere mit gleichbleibender Vergrößerung dargestellt, unabhängig von einer Veränderung der Lage des Interessensbereichs in der Umgebung.

Mittels des Kamera-Monitor-Systems ist es möglich, die Umgebung des Kraftfahrzeugs auf einem Monitor des Kamera-Monitor-Systems für einen Fahrer des Kraftfahrzeugs darzustellen, sodass auf herkömmliche Außenspiegel verzichtet werden kann. Bei Kraftfahrzeugen, die einen Anhänger aufweisen, kann es zu starken Knickwinkeln zwischen dem Zugfahrzeug und dem Anhänger kommen, beispielsweise bei Rangiermanövern, insbesondere bei einer Rückwärtsfahrt. Die Anhängerhinterkante bewegt sich dann in Richtung eines mittleren Bereichs des Bildes. Um zu vermeiden, dass ein Großteil des auf dem Monitor dargestellten Bildes lediglich eine Seitenfläche des Anhängers abbildet, wird das Bild der Kamera entsprechend transformiert.

Der Interessensbereich ist beispielsweise ein Bereich unmittelbar neben dem Anhänger. Der Interessensbereich entspricht beispielsweise der gesetzlichen Sichtfeldklasse 2, wenn Anhänger und Zugfahrzeug gerade zueinander ausgerichtet sind. Der Interessensbereich ist beispielsweise ein Teil der gesetzlichen Sichtfeldklasse 2, wenn Anhänger und Zugfahrzeug gerade zueinander ausgerichtet sind. Wenn das Zugfahrzeug und der Anhänger zueinander geknickt sind, verschiebt sich der Interessensbereich entsprechend einem Knickwinkel zwischen dem Zugfahrzeug und dem Anhänger. Im transformierten Bild wird der Interessensbereich weiterhin in dem vorgegebenen Bildbereich dargestellt. Hierfür wird beispielsweise im transformierten Bild der Anhänger stärker gestaucht dargestellt als die Umgebung neben dem Anhänger. Somit ist vermeidbar, dass der Anhänger auch bei starken Knickwinkeln einen ungewünscht großen Bereich des im Monitor dargestellten transformierten Bildes einnimmt. Auch wenn sich in der Umgebung der Interessensbereich verschiebt, weil beispielsweise der Anhänger ausschert, wird das Bild so transformiert, dass eine ähnliche Bildaufteilung wie bei einer geraden Ausrichtung des Zugfahrzeugs und des Anhängers bestehen bleibt.

Gemäß der Erfindung umfasst das Vorgeben des Interessensbereichs ein Ermitteln eines vorgegebenen Bildinhalts, beispielsweise der Anhängerhinterkante. Alternativ oder zusätzlich werden Fahrzeugdaten ermittelt, um den Interessensbereich vorzugeben. Dies kann eine Anhängerpositionsbereitstellung über einen Systemeingang wie CAN umfassen oder anderweitige Daten, die im Steuersystem des Kraftfahrzeugs vorliegen. Alternativ oder zusätzlich wird der Interessensbereich mittels einer Eingabevorrichtung vorgegeben, insbesondere vom Nutzer des Kraftfahrzeugs. Die Eingabevorrichtung umfasst beispielsweise einen Joystick, einen Touchscreen und/oder eine Blickerfassung. Somit wird dem Nutzer des Kraftfahrzeugs ermöglicht, einen Bereich in der Umgebung vorzugeben, der stets in dem vorgegebenen Bildbereich des transformierten Bildes dargestellt werden soll und insbesondere nicht von dem Anhänger überdeckt werden soll.

Das Bild wird so transformiert, dass vorgegebene Bereiche der Umgebung im transformierten Bild unterschiedlich stark vergrößert in vorgegebenen Bildbereichen abgebildet werden. Die jeweiligen Positionen der Bildbereiche in dem transformierten Bild werden in Abhängigkeit von der Veränderung der Lage des Interessensbereichs in der Umgebung verändert. Beispielsweise wird ein Bildbereich mit schwacher horizontaler und vertikaler Stauchung, der zumindest teilweise die gesetzliche Sichtfeldklasse 2 abdeckt, im transformierten Bild in Richtung der Mitte des Bildes horizontal verschoben. Auch eine vertikale Verschiebung ist möglich. Entsprechend werden bei horizontaler Verschiebung die Bereiche neben dem verschobenen Bereich stärker horizontal gestaucht. Insgesamt bleibt so ein Anteil der dargestellten

Umgebung zum Anteil des dargestellten Kraftfahrzeugs in dem transformierten Bild nahezu gleich, insbesondere in dem Bildbereich mit schwacher Stauchung.

Gemäß zumindest einer Ausführungsform wird die Vergrößerung in dem Bildbereich, der unmittelbar an den Bildbereich angrenzt, der den Interessensbereich abbildet, verändert, wenn sich die Position der Bildbereiche verändert. Dieser Bildbereich ist insbesondere der Bildbereich, der auch einen Teil des Anhängers des Kraftfahrzeugs abbildet. Die Umgebung wird in diesem Bildbereich stark horizontal gestaucht. Somit ist es möglich, den angrenzenden Bildbereich, der den Interessensbereich zumindest teilweise abbildet, so im transformierten Bild abzubilden, dass der Interessensbereich in dem vorgegebenen Bildbereich angeordnet ist.

Gemäß zumindest einer Ausführungsform wird das Bild vor dem Transformieren entzerrt. Das Eingangsbild der Kamera wird beispielsweise so entzerrt, dass bekannte Verzerrungen aufgrund von verwendeten Linsen ausgeglichen werden.

Gemäß zumindest einer Ausführungsform wird das Bild aus mehreren Eingangsbildern zusammengesetzt. Beispielsweise weist das Kamera-Monitor-System zwei Kameras auf, die der gemeinsamen Längsseite des Kraftfahrzeugs zugeordnet sind, und die jeweils dazu ausgebildet sind, ein Bild der Umgebung des Kraftfahrzeugs bereitzustellen, wobei die abgebildete Umgebung der Bilder teilweise überlappt.

Das Bild wird beispielsweise aus Eingangsbildern der beiden Kameras zusammengesetzt. Beispielsweise wird eine Kamera mit einer hohen Brennweite und einem geringen Sichtwinkel verwendet, beispielsweise mit einer Telelinse. Diese Kamera dient zur Abbildung einer Umgebung neben und hinter dem Kraftfahrzeug. Beispielsweise wird eine zweite Kamera verwendet, die eine große Brennweite und einen großen Sichtwinkel aufweist, beispielsweise mit einer Weitwinkellinse. Diese dient beispielsweise dazu, einen Bereich am vorderen Eck des Kraftfahrzeugs beziehungsweise des Zugfahrzeugs aufzunehmen, beispielsweise um die gesetzliche Sichtfeldklasse 5 am Monitor des Kamera-Monitor-Systems abzubilden.

Die Vorrichtung für das Kraftfahrzeug, die ausgebildet ist, das Verfahren gemäß zumindest einer Ausführungsform durchzuführen, ist beispielsweise Teil eines Steuergeräts für das Kraftfahrzeug (englisch: ECU, electronic control unit).

Vorteile, Merkmale und Weiterbildungen, die für das Verfahren beschrieben sind, gelten auch für die Vorrichtung und umgekehrt.

Weitere Vorteile, Merkmale und Weiterbildungen ergeben sich aus den nachfolgenden, in Verbindung mit den Figuren erläuterten Beispielen. Gleiche, gleichartige und gleichwirkende Elemente können figurenübergreifend mit den gleichen Bezugszeichen versehen sein.

Es zeigen:
Figur 1 eine schematische Darstellung eines Kraftfahrzeugs mit einem Kamera-Monitor-System gemäß einem Ausführungsbeispiel,
Figur 2 eine schematische Darstellung eines Gesamtbildes gemäß einem Ausführungsbeispiel und
Figur 3 eine schematische Darstellung von Bildbereichen im transformierten Bild gemäß einem Ausführungsbeispiel.

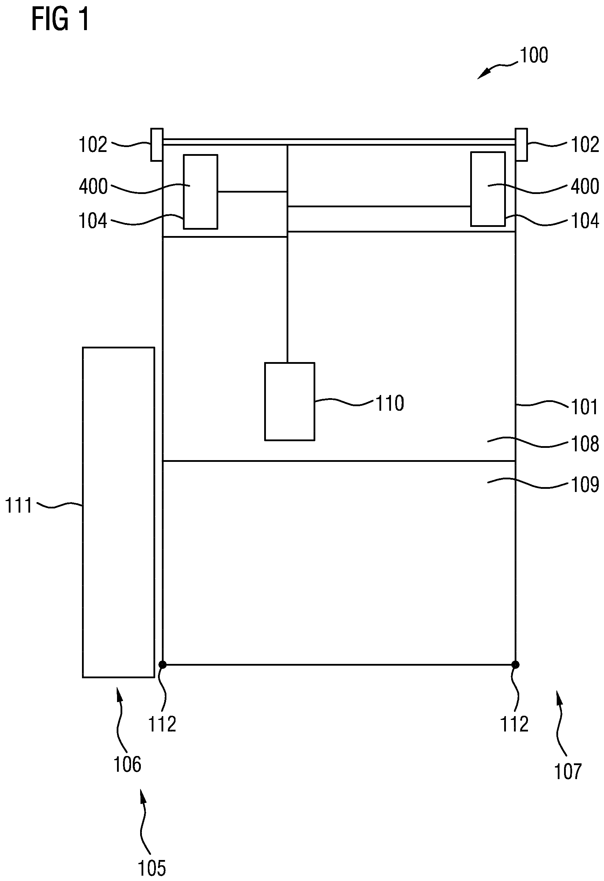

Figur 1 zeigt eine schematische Darstellung eines Kraftfahrzeugs 101 gemäß einem Ausführungsbeispiel von oben. Das Kraftfahrzeug 101 ist beispielsweise ein Lastkraftwagen mit einem Zugfahrzeug 101 und einem Anhänger 109. Gemäß weiteren Ausführungsbeispielen ist das Kraftfahrzeug ein Bus und/oder Personenkraftwagen insbesondere mit dem Anhänger 109.

Das Kraftfahrzeug 101 weist ein Kamera-Monitor-System 100 als Spiegelersatzsystem auf. Das Kamera-Monitor-System 100 weist je Seite 106, 107 des Kraftfahrzeugs 101 eine Kamera 102 auf. Die Kameras 102 dienen jeweils dazu, eine Umgebung der jeweiligen zugeordneten Seite 106, 107 aufzunehmen. Gemäß weiteren Ausführungsbeispielen sind je Seite 106, 107 mehrere Kameras vorgesehen, beispielsweise zwei Kameras oder mehr. Gemäß weiteren Ausführungsbeispielen ist die Kamera 102 lediglich an einer Seite der Seiten 106, 107 angeordnet.

Das Kamera-Monitor-System 100 weist zwei Monitore 104 auf, die jeweils einer der Seiten 106, 107 zugeordnet sind. Im Betrieb wird ein Ausschnitt der Umgebung 105 auf der Seite 106, der von der Kamera 102 aufgezeichnet wird, auf dem zugeordneten Monitor 104 als Gesamtbild 400 dargestellt. Auf dem Monitor 104, der der Seite 107 zugeordnet ist, wird ein Ausschnitt aus der Umgebung 105 als Gesamtbild 400 dargestellt, das mittels der Kamera 102 aufgezeichnet wird, die der Seite 107 zugeordnet ist.

Somit unterscheidet sich das Gesamtbild 400 auf den beiden Monitoren 104.

Das Gesamtbild 400 auf dem Monitor 104 ist insbesondere dazu eingerichtet, ein Spiegelbild eines herkömmlichen Außenspiegels darzustellen, insbesondere weitere Ausschnitte aus der Umgebung 105 darzustellen, die mit herkömmlichen Außenspiegeln nicht abbildbar sind.

Eine Vorrichtung 110 ist vorgesehen, mit der die Kameras 102 und die Monitore 104 signaltechnisch gekoppelt sind. Die Vorrichtung 110 ist eingerichtet, sowohl die Kameras 102 als auch die Monitore 104 zu steuern. Beispielsweise ist die Vorrichtung 110 ein Steuergerät oder ein Teil eines Steuergeräts des Kraftfahrzeugs 101.

Das Bild der Kamera 102 wird so transformiert, dass bei gerader Ausrichtung des Zugfahrzeugs 108 und des Anhängers 109 ein im Gesamtbild 400 dargestellter Sichtbereich mit dem Anhänger 109 fluchtet. Neben dem Anhänger 109 ist ein Interessensbereich 111 vorgegeben. Beispielsweise ist der Interessensbereich 111 ein Bereich in der Umgebung 105, der für einen Nutzer des Kraftfahrzeugs 101 im Betrieb von besonderem Interesse ist, beispielsweise bei Rangiermanövern. Der Interessensbereich 111 ist beispielsweise so vorgegeben, dass er neben dem Anhänger 109 und insbesondere an einer Hinterkante 112 des Anhängers 109 liegt.

Bei Rangiermanövern, insbesondere bei einer Rückwärtsfahrt des Kraftfahrzeugs 101, kann es zu starken Knickwinkeln zwischen dem Zugfahrzeug 108 und dem Anhänger 109 kommen. Die Anhängerhinterkante 112 bewegt sich dann beispielsweise nach rechts. Somit würde herkömmlich ein Bildbereich des Gesamtbilds 400, der bei gerader Ausrichtung des Anhängers 109 zum Zugfahrzeug 108 den Interessenbereich 111 stark vergrößert darstellt, zum Großteil oder vollständig von der Längsseite des Anhängers 109 verdeckt werden. Dieser Bereich des Gesamtbilds wird damit weniger nützlich für den Fahrer des Kraftfahrzeugs 101.

Um den Interessensbereich 111 unabhängig von dem Knickwinkel zwischen dem Zugfahrzeug 108 und dem Anhänger 109 im Gesamtbild 400 stets zuverlässig abzubilden und den Anteil im Gesamtbild 400 möglichst groß zu halten, der für den Fahrer nützliche Informationen umfasst, wird die Aufteilung und die Vergrößerung in unterschiedlichen Bildbereichen des Gesamtbilds 400 im Betrieb angepasst. Somit wird der Anteil im Gesamtbild 400, der von dem Anhänger 109 bedeckt wird, möglichst klein und konstant gehalten.

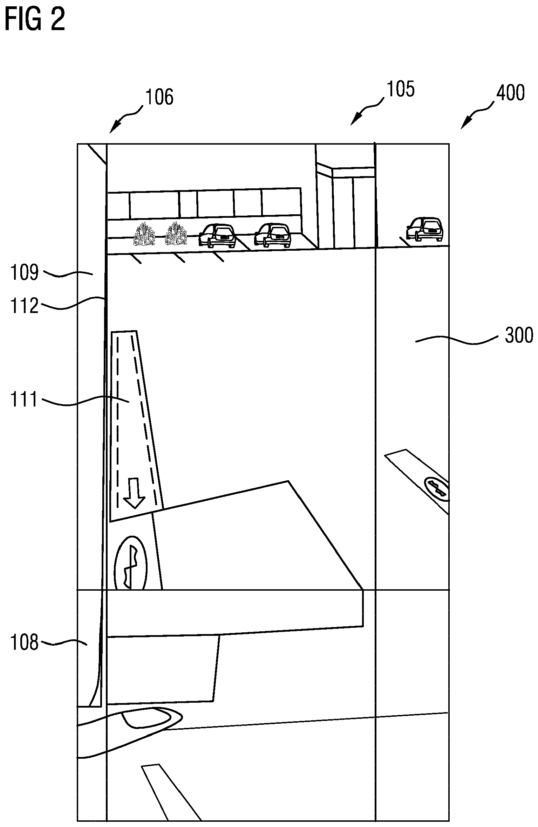

Figur 2 zeigt ein Gesamtbild 400 gemäß einem Ausführungsbeispiel. Das Bild der Kamera 102 ist so transformiert, dass der Anhänger 109 lediglich am linken Rand dargestellt wird. Der Interessensbereich 111 wird in einem Bildbereich 301 dargestellt.

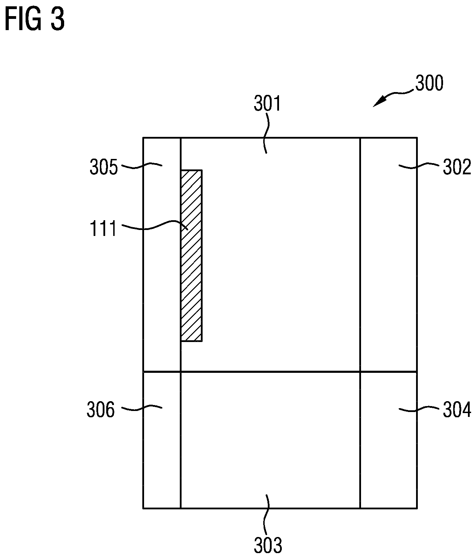

Das Gesamtbild 400 ist in Bildbereiche 301 bis 306 unterteilt, wie in Figur 3 dargestellt. Die Vergrößerung beziehungsweise die Stauchung und Zerrung der Darstellung der Umgebung 105 im Gesamtbild 400 ist je Bildbereich 301 bis 306 unterschiedlich zueinander. Bei einem starken Knickwinkel zwischen dem Zugfahrzeug 108 und dem Anhänger 109 wird die Umgebung im transformierten Bild 300 im Bildbereich 305 stark gestaucht, damit der Anhänger 109 möglichst wenig Platz im Gesamtbild 400 einnimmt. Der Bildbereich 301, der an dem Bildbereich 305 angrenzt, kann somit mit der herkömmlichen Vergrößerung die Umgebung 105 abbilden, ohne dass der Anhänger 109 im Bildbereich 301 dargestellt wird beziehungsweise ohne dass die Abbildung des Anhängers 109 im Bildbereich 301 zu viel Platz einnimmt. Der Interessensbereich 111 wird somit stets im Bildbereich 301 dargestellt.

Bei gerader Ausrichtung zwischen dem Anhänger 109 und dem Zugfahrzeug 108 ist es möglich, auf den Bildbereich 305 zu verzichten. Der Bildbereich 301 mit der starken Vergrößerung bildet den Anhänger 109 am Rand ab und ansonsten den Interessensbereich 111 und weitere Teile der Umgebung 105. Bei einem großen Knickwinkel zwischen dem Zugfahrzeug 108 und dem Anhänger 109 würde herkömmlich der Anhänger 109 den Bildbereich 301 fast vollständig verdecken. Daher wird der Bereich 301 im transformierten Bild 300 verschoben und zusätzlich der Bildbereich 305 mit einer zum Bildbereich 301 unterschiedlichen Vergrößerung dargestellt.

Beispielsweise sind die Bildbereiche 302 und 304 deutlich stärker in horizontaler Richtung gestaucht als die Bildbereiche 301 und 303. Die Bildbereiche 303 und 304 sind beispielsweise deutlich stärker in vertikaler Richtung gestaucht als die Bildbereiche 301 und 302. Beispielsweise werden die Eingangsbilder für die Bildbereiche 301 und 302 mit einer Kamera mit Telelinse aufgenommen. Die Eingangsbilder für die Bildbereiche 303 und 304 werden beispielsweise von einer Kamera mit Weitwinkellinse aufgenommen. Das transformierte Bild 300 wird aus den Eingangsbildern der beiden Kameras zusammengesetzt. Somit können die gesetzlichen Sichtfeldklassen 2, 4 und 5 abgebildet werden und insbesondere weitere Bereiche aus der Umgebung 105 abgebildet werden. Die gesetzliche Sichtfeldklasse 2 wird beispielsweise in den Bildbereichen 301 und 305 dargestellt.

Der Interessensbereich 111 ist beispielsweise relativ zum Kraftfahrzeug 101, insbesondere relativ zum Anhänger 109, vorgegeben. Auch andere Möglichkeiten den Interessensbereich 111 vorzugeben sind möglich. Beispielsweise wird eine Anhängerkantenerkennung aus Bildinformationen der Kamera 102 und Fahrzeugdaten durchgeführt. Es ist auch möglich, dass eine Anhängerpositionsbereitstellung über einen Systemeingang wie CAN beispielsweise den Knickwinkel zwischen dem Zugfahrzeug 108 und dem Anhänger 109 bereitstellt. Alternativ oder zusätzlich ist auch eine manuelle Auswahl des Interessensbereichs 111 möglich, beispielsweise wählt der Fahrer des Kraftfahrzeugs 101 den Interessensbereich 111 mit einer Eingabevorrichtung wie einem Joystick, einem Touchscreen oder einer Blickerfassung oder anderen Eingabevorrichtungen.

In Abhängigkeit von der Information über die relative Ausrichtung des Anhängers 109 zum Zugfahrzeug 108 wird das Kamerasichtfeld in den einzelnen Bereichen 301 bis 306 nachgeführt. Auch wenn sich der Interessensbereich 111 im Eingangskamerabild verschiebt, also beispielsweise nach rechts wandert, wird im transformierten Bild 300 der Interessensbereich 111 weiterhin im Bildbereich 301 dargestellt. Insbesondere wird hierzu der Bildbereich 301 geändert. Insbesondere wird die Lage des Bildbereichs 301 im transformierten Bild geändert. Insbesondere wird die Lage des Bildbereichs 301 im Gesamtbild 400 geändert. Wenn beispielsweise der Fahrer nach rechts einschert und somit der Fahrzeuganhänger im Eingangsbild in Richtung des Bildbereichs 302 abknickt, wird der aus dem Eingangsbild ausgeschnittene Bereich derart geändert, dass die Anhängerhinterkante 112 im transformierten Bild 300 weiterhin fast ganz am Rand dargestellt wird und der Interessensbereich 111 weiterhin im Bildbereich 301 dargestellt wird. Die Anhängerhinterkante 112 wird im Bildbereich 305 dargestellt, der eine zum Bildbereich 301 andere Vergrößerung aufweist. Somit ist es möglich, den Anhänger 109 im transformierten Bild 300 stark gestaucht darzustellen und den Interessensbereich 111 mit einer gewünschten Vergrößerung ausreichend groß darzustellen.

Der Bildbereich 301 im Gesamtbild 400 wird beispielsweise nach rechts verschoben, um zum einen weiterhin einen kontinuierlichen Übergang zum Bildbereich 302 zu realisieren und zum anderen, um auch bei abgeknicktem Anhänger 109 relativ zum Zugfahrzeug 108 das gesamte Eingangsbild am Monitor 104 anzeigen zu können. Hierfür werden im transformierten Bild 300 links von dem Bildbereich 301 und links vom Bildbereich 303 neue Bildbereiche 305 und 306 angezeigt, die im Vergleich zu den Bildbereichen 301 und 303 deutlich stärker horizontal gestaucht sind. Beispielsweise ist die Stauchung im Bildbereich 305 um den Faktor 5 größer als die Stauchung im Bildbereich 301.

Zusätzlich zur horizontalen Verschiebung der Darstellung des Interessensbereichs 111 beziehungsweise des Bildbereichs 301 ist alternativ oder zusätzlich auch eine vertikale Verschiebung möglich. Entsprechend werden dann oberhalb der Bildbereiche 301 und 303 zusätzliche Bildbereiche angezeigt, in denen die Umgebung 105 in vertikaler Richtung stärker gestaucht dargestellt wird als in den Bildbereichen 301 und 302 beziehungsweise 305.

Der Übergang zwischen jeweils zwei unmittelbar aneinander angrenzenden Bildbereichen wird gemäß Ausführungsformen möglichst kontinuierlich gestaltet. Hierfür ändert sich beispielsweise der Stauchungsfaktor zwischen den Bildbereichen nicht abrupt von einem Pixel zum benachbarten Pixel sondern kontinuierlich über mehrere Pixel hinweg. Auch hier können die Bildbereiche 301 bis 306 entsprechend nachgeführt werden. Gemäß Ausführungsbeispiel wird das Eingangsbild vor dem Transformieren verzerrt oder entzerrt, beispielsweise linsenentzerrt.

Es ist auch möglich, dass das Bild vor dem Transformieren aus mehreren verschiedenen Kameraeingangsbildern zusammengesetzt oder gestitcht wird. Beispielsweise wird für die Bildbereiche 301, 302 und 305 das Eingangsbild einer ersten Kamera verwendet und für die Bildbereiche 303, 304 und 306 das Eingangsbild einer zweiten Kamera. Das Gesamtbild 400 am Monitor 104 zeigt stets einen möglichst großen Anteil der Umgebung 105 der nicht von einer Darstellung des Anhängers 109 verdeckt wird. Somit werden insbesondere Rangierfahrten vereinfacht, beispielsweise beim Einparken.

Objekte am Ende des Anhängers 109 werden durch die Vergrößerung im Bildbereich 301 besser gesehen. Bei schräg stehendem Anhänger 109 wird die Gefahr für Personen in der Nähe des Kraftfahrzeugs 101 reduziert. Der Bereich in der Nähe des Kraftfahrzeugs 101 wird vergrößert im Bildbereich 301 dargestellt und daher möglichst wenig gestaucht am Monitor 104 dargestellt. Aufgrund der Möglichkeit, den Interessensbereich 111 manuell zu wählen, wird dem Fahrer die gesamte Bildinformation der Kamera 102 zugänglich gemacht, insbesondere auch die Außenbereiche des Bilds der Kamera 102 in hoher Auflösung.

Insgesamt wird das Sichtfeld, das auf den Monitor 104 des Kamera-Monitor-Systems 100 dargestellt wird, im Fall von starken Knickwinkeln zwischen dem Zugfahrzeug 108 und dem Anhänger 109 verbessert.

## Patentansprüche

1. Verfahren zum Betreiben eines Kamera-Monitor-Systems (100) für ein Kraftfahrzeug (101), das ein Lastkraftwagen mit einem Zugfahrzeug (108) und einem Anhänger (109) ist, bei dem das Kamera-Monitor-System (100) eine Kamera (102) aufweist, die einer Längsseite (106) des Kraftfahrzeugs zugeordnet ist und die dazu ausgebildet ist, ein Bild einer Umgebung (105) des Kraftfahrzeugs (101) bereit zu stellen, umfassend:
- Vorgeben eines Interessensbereichs (111) in der Umgebung (105), wobei das Vorgeben des Interessensbereichs (111) eine Ermittlung eines vorgegebenen Bildinhalts und/oder eine Ermittlung von Fahrzeugdaten und/oder ein Vorgeben mittels einer Eingabevorrichtung umfasst,
- Transformieren des Bildes der Kamera (102) zu einem transformierten Bild (300), sodass der Interessensbereich (111) in dem transformierten Bild (300) in einem vorgegebenen Bildbereich (301) angeordnet ist,
wobei der vorgegebene Bildbereich (301) eine vorgegebene Vergrößerung aufweist, und der Interessensbereich (111) in dem transformierten Bild (300) mit gleichbleibender Vergrößerung dargestellt wird,
unabhängig von einer Veränderung der Lage des Interessensbereichs (111) in der Umgebung (105),
und wobei das Bild so transformiert wird, dass vorgegebene Bereiche der Umgebung (105) im transformierten Bild (300) unterschiedlich stark vergrößert in vorgegebenen Bildbereichen (301 - 306) abgebildet werden, wobei die jeweiligen Positionen der Bildbereiche in dem transformierten Bild (300) in Abhängigkeit von der Veränderung der Lage des Interessensbereichs (111) in der Umgebung (105) verändert werden,
wobei bei einem starken Knickwinkel zwischen dem Zugfahrzeug (108) und dem Anhänger (109) die Umgebung im transformierten Bild (300) in einem Bildbereich (305), in dem eine Anhängerhinterkante (112) dargestellt wird, stark gestaucht wird, damit der Anhänger (109) möglichst wenig Platz im Gesamtbild einnimmt, und der Bildbereich (301), in dem der Interessensbereich (111) angeordnet ist und der an dem Bildbereich (305), in dem die Anhängerhinterkante dargestellt wird, angrenzt, somit mit der herkömmlichen Vergrößerung die Umgebung (105) abbilden kann, ohne dass der Anhänger (109) in dem Bildbereich (301), in dem der Interessensbereich angeordnet ist, dargestellt wird und/oder ohne dass die Abbildung des Anhängers (109) im Bildbereich (301), in dem der Interessensbereich angeordnet ist, zu viel Platz einnimmt,wobei der Interessensbereich (111) stets im vorgegebenen Bildbereich (301) dargestellt wird.

2. Verfahren nach Anspruch 1, bei dem der Interessensbereich (111) ein Bereich der Anhängerhinterkante (112) des Anhängers (109) des Kraftfahrzeugs (101) ist.

3. Verfahren nach Anspruch 1 oder 2, umfassend:
- Transformieren des Bilds mit einem sich kontinuierlich ändernden Stauchungsfaktor, sodass zwischen unmittelbar aneinander angrenzenden Bildbereichen (301 - 306) ein kontinuierlicher Übergang dargestellt wird.

4. Verfahren nach einem der Ansprüche 1 bis 3, umfassend:
- Entzerren des Bildes vor dem Transformieren.

5. Verfahren nach einem der Ansprüche 1 bis 4, umfassend:
- Zusammensetzen des Bilds aus mehreren Eingangsbildern.

6. Verfahren nach einem der Ansprüche 1 bis 5, bei dem das Kamera-Monitor-System (100)
je Seite (106, 107) des Kraftfahrzeugs eine Kamera (102) aufweist,
wobei die Kameras (102) jeweils dazu dienen, eine Umgebung (105) der jeweiligen zugeordneten Seite (106, 107) aufzunehmen,
und wobei je Seite (106, 107) zwei Kameras vorgesehen sind, wobei das Bild aus Eingangsbildern der beiden Kameras zusammengesetzt wird,
wobei eine Kamera zur Abbildung einer Umgebung neben und hinter dem Kraftfahrzeug dient und eine zweite Kamera dazu dient, einen Bereich am vorderen Eck des Kraftfahrzeugs aufzunehmen.

7. Vorrichtung für ein Kraftfahrzeug, das ein Lastkraftwagen mit einem Zugfahrzeug (108) und einem Anhänger (109) ist, die ausgebildet ist, ein Verfahren nach einem der Ansprüche 1 bis 6 auszuführen.

## Claims

1. Method for operating a camera/monitor system (100) for a motor vehicle (101) which is a truck with a tractor (108) and a trailer (109), in which the camera/monitor system (100) comprises a camera (102) assigned to a longitudinal side (106) of the motor vehicle and designed to provide an image of a surround (105) of the motor vehicle (101), comprising:
- specifying a region of interest (111) in the surround (105), the specification of the region of interest (111) comprising a determination of a specified image content and/or a determination of vehicle data and/or a specification by means of an input device,
- transforming the image of the camera (102) into a transformed image (300) such that the region of interest (111) is arranged in a specified image region (301) in the transformed image (300),
wherein the specified image region (301) has a specified magnification, and the region of interest (111) is depicted in the transformed image (300) with unchanging magnification,
independently of a change in the position of the region of interest (111) in the surround (105),
and wherein the image is transformed such that specified regions of the surround (105) are depicted with different magnifications in specified image regions (301-306) in the transformed image (300), wherein the respective positions of the image regions are changed in the transformed image (300) on the basis of the change of the position of the region of interest (111) in the surround (105),
wherein, in the case of a significant articulation angle between the tractor (108) and the trailer (109), the surround in the transformed image (300) is compressed significantly in an image region (305) in which a trailer rear edge (112) is depicted so that the trailer (109) takes up as little space as possible in the overall region, and the image region (301), in which the region of interest (111) is arranged and which is adjacent to the image region (305) in which the trailer rear edge is depicted, can consequently represent the surround (105) with the conventional magnification without the trailer (109) being depicted in the image region (301) in which the region of interest is arranged and/or without the image of the trailer (109) taking up too much space in the image region (301) in which the region of interest is arranged, wherein the region of interest (111) is always depicted in the specified image region (301).

2. Method according to Claim 1, wherein the region of interest (111) is a region of the trailer rear edge (112) of the trailer (109) of the motor vehicle (101).

3. Method according to Claim 1 or 2, comprising:
- transforming the image with a continuously changing compression factor such that a continuous transition is depicted between image regions (301-306) that directly adjoin one another.

4. Method according to any of Claims 1 to 3, comprising:
- rectifying the image prior to the transformation.

5. Method according to any of Claims 1 to 4, comprising:
- assembling the image from a plurality of input images.

6. Method according to any of Claims 1 to 5, wherein the camera/monitor system (100)
has a camera (102) on each side (106, 107) of the motor vehicle,
wherein each camera (102) is used to record a surround (105) of the respectively assigned side (106, 107),
and wherein two cameras are provided on each side (106, 107), wherein the image is assembled from input images of the two cameras,
wherein one camera is used to image a surround next to and behind the motor vehicle and a second camera is used to record a region at the front corner of the motor vehicle.

7. Device for motor vehicle which is a truck with a tractor (108) and a trailer (109), the device being designed to carry out a method according to any of Claims 1 to 6.

## Revendications

1. Procédé de fonctionnement d'un système caméra-moniteur (100) destiné à un véhicule automobile (101), qui est un camion comprenant un véhicule tracteur (108) et une remorque (109), dans lequel le système caméra-moniteur (100) comporte une caméra (102) qui est associée à un côté longitudinal (106) du véhicule automobile et qui est conçue pour fournir une image d'un environnement (105) du véhicule automobile (101), ledit procédé comprenant les étapes suivantes :
- spécifier une zone d'intérêt (111) dans l'environnement (105), la spécification de la zone d'intérêt (111) comprenant la détermination d'un contenu d'image spécifié et/ou la détermination de données de véhicule et/ou la spécification à l'aide d'un dispositif d'entrée,
- transformer l'image de la caméra (102) en une image transformée (300) de sorte que la zone d'intérêt (111) dans l'image transformée (300) est située dans une zone d'image spécifiée (301),
la zone d'image spécifiée (301) ayant un grossissement spécifié, et la zone d'intérêt (111) dans l'image transformée (300) étant représentée avec un grossissement constant, indépendamment d'un changement de position de la zone d'intérêt (111) dans l'environnement (105),
et l'image étant transformée de telle sorte que des zones spécifiées de l'environnement (105) dans l'image transformée (300) soient reproduites de manière fortement agrandie à différents degrés dans des zones d'image spécifiées (301 - 306), les positions respectives des zones d'image dans l'image transformée (300) étant modifiées en fonction du changement de position de la zone d'intérêt (111) dans l'environnement (105),
lorsque l'angle d'inflexion entre le véhicule tracteur (108) et la remorque (109) est important, l'environnement dans l'image transformée (300) étant fortement compressé dans une zone d'image (305) dans laquelle un bord de remorque arrière (112) est représenté de sorte que la remorque (109) occupe le moins de place possible dans toute l'image, et la zone d'image (301) dans laquelle est située la zone d'intérêt (111) et qui est adjacente à la zone d'image (305) dans laquelle le bord de remorque arrière est représenté, peut donc reproduire l'environnement avec le grossissement d'usage (105) sans que la remorque (109) ne soit présentée dans la zone d'image (301) dans laquelle la zone d'intérêt est située et/ou sans que le reproduction de la remorque (109) n'occupe trop de place dans la zone d'image (301) dans laquelle la zone d'intérêt est située, la zone d'intérêt (111) étant toujours présentée dans la zone d'image spécifiée (301).

2. Procédé selon la revendication 1, dans lequel la zone d'intérêt (111) est une zone du bord de remorque arrière (112) de la remorque (109) du véhicule automobile (101).

3. Procédé selon la revendication 1 ou 2, comprenant l'étape suivante :
- transformer l'image avec un facteur de compression variant de manière continue de sorte qu'une transition continue soit présentée entre des zones d'image (301-306) immédiatement adjacentes.

4. Procédé selon l'une des revendications 1 à 3, comprenant l'étape suivante :
- corriger l'image avant de la transformer.

5. Procédé selon l'une des revendications 1 à 4, comprenant l'étape suivante :
- composer l'image à partir de plusieurs images d'entrée.

6. Procédé selon l'une des revendications 1 à 5, dans lequel le système caméra-moniteur (100) comporte une caméra (102) de chaque côté (106, 107) du véhicule automobile,
les caméras (102) servant chacune à acquérir un environnement (105) du côté associé respectif (106, 107),
et
deux caméras étant prévues de chaque côté (106, 107), l'image étant composée des images d'entrée des deux caméras,
une caméra servant à reproduire un environnement à côté du véhicule automobile et derrière celui-ci et une deuxième caméra servant à acquérir une zone au coin avant du véhicule automobile.

7. Dispositif destiné à un véhicule automobile qui est un camion comprenant un véhicule tracteur (108) et une remorque (109), lequel dispositif est conçu pour mettre en oeuvre un procédé selon l'une des revendications 1 à 6.
